# EUROPÄISCHE PATENTSCHRIFT

(11) **EP 1 435 368 B1**
(45) Veröffentlichungstag und Bekanntmachung des Hinweises auf die Patenterteilung: **16.09.2009**
(21) Anmeldenummer: 03029165.2
(22) Anmeldetag: 18.12.2003
(51) Int. Cl.: C08J 5/18, C08L 33/12, C08L 23/08

(54) **Kunststoff-Folie**
Plastic film
Film plastique

(30) Priorität: 02.01.2003 DE 10300299
(43) Veröffentlichungstag der Anmeldung: 07.07.2004
(73) Patentinhaber: Huhtamaki Forchheim Zweigniederlassung der Huhtamaki Deutschland GmbH & Co. KG, 91299 Forchheim (DE)
(72) Erfinder: Bernhard, Sven, Dr., 91301 Forchheim (DE)
(74) Vertreter: Hutzelmann, Gerhard

(56) Entgegenhaltungen:
- EP-A- 1 104 782
- WO-A-93/06137
- US-A- 4 504 977
- US-A- 5 051 297
- US-A- 5 571 878
- US-A1- 2002 182 391
- US-B1- 6 469 102
- PATENT ABSTRACTS OF JAPAN Bd. 2000, Nr. 04, 31. August 2000 (2000-08-31) & JP 2000 001556 A (KAO CORP), 7. Januar 2000 (2000-01-07)

## Beschreibung

Die Erfindung bezieht sich auf eine Kunststoff-Folie, die im Blasverfahren hergestellt ist, wobei die Folie Random-Copolymere aus Ethylen und Acrylsäuremethylester (EMA-Copolymere) enthält, wobei die EMA-Copolymere mit EVA abgemischt sind.

Aus der US-A-2002/0182 391 ist beispielsweise eine als Verpackungsfolie einsetzbare relativ steife Mehrschicht-Folie bekannt, die mit EVA abgemischte EMA-Copolymere enthält.

Aus der US-B-6,469,102, der US-A-4,504,977 und der US-A-5,571,878 sind zu Folien verarbeitbare EMA-Copolymere bekannt.

Aus der US-A-5,051,297 sind desweiteren im Blasverfahrenhergestellte EMA Folien bekannt, die zusätzlich Polyethylen enthalten. In der EP-A-1 104 782 ist zusätzlich die Abmischung von EMA mit HDPE beschrieben.

Aus der WO-A-93/06137 sind Folien bekannt, die EMA/LDPE enthalten.

Zusätzlich ist auch aus der JP-2000-001556 bekannt, Folien aus mit verschiedenen Polyethylenen abgemischtern EMA herzustellen.

Alle diese bekannten Folien weisen jedoch gerade bei Kälte nur schlechte Eigenschaften auf und sind vergleichsweise steif.

Der Erfindung liegt die Aufgabe zugrunde, eine Kunststoff-Folie vorzuschlagen, die auch bei tieferen Temperaturen günstige Eigenschaften aufweist.

Diese Aufgabe wird erfindungsgemäß dadurch gelöst, daß Füllstoffe vorgesehen sind und die EMA-Copolyzaaere mit EVA und Polyethylen niedriger Dichte, LDPE bzw. LLDPE, PP und/oder EAA gemischt sein können.

Eine so hergestellte Folie hat aufgrund der niedrigen Glasübergangstemperatur sehr gute Eigenschaften auch bei niedrigen Temperaturen. Diese Folie ist sehr weich bei gleichzeitig hohen Festigkeitswerten.

Hierbei sind die günstigen Eigenschaften beider Materialien miteinander vereinigt; die über das Mischungsverhältnis beeinflusst werden können.

Eine sehr vorteilhafte Ausgestaltung der Erfindung ist dadurch gegeben, daß ein Anteil von Acrylsäuremethylester im Bereich von 5 bis 30 % vorzugsweise von 12 bis 24 % in den EMA-Copolymeren vorgesehen ist.

Hierbei haben sich besonders vorteilhafte Eigenschaften der Kunststoff-Folie ergeben.

Dabei hat es sich als besonders vorteilhaft ergeben, wenn erfindungsgemäß als Füllstoffe Kreide und/oder Talkum und/oder Kieselsäure vorgesehen sind.

Eine erfindungsgemäß im Blasverfahren hergestellte Kunststoff-Folie besteht aus Random-Copolymeren aus Ethylen und Acrylsäuremethylester, wobei der Anteil an Acrylsäuremethylester zwischen 12 und 24 % liegt.

Diese Folie ist sehr weich und geschmeidig, wodurch sie sich insbesondere als Handschuhfolie oder als Latexersatz eignet.

Die Geschmeidigkeit ist so ausgeprägt, daß die Folie nach dem Blasen und Flachlegen nicht wie sonst üblich geschlitzt werden kann sondern besäumt werden muß.

Die EMA-Copolymere können auch mit Polyethylen niedriger Dichte wie z.B. LDPE oder LLDPE abgemischt sein.

Auch hieraus ergeben sich Folien, die sehr weich und geschmeidig sind.

Eine Abmischung der EMA-Copolymere mit HDPE ist ebenfalls möglich, wobei entsprechend dem gewählten Mischungsverhältnis die Eigenschaften der daraus hergestellten Folie eingestellt werden können.

Eine weitere Mischfolie ergibt sich, wenn EMA-Copolymere mit PP abgemischt werden.

Die daraus hergestellte Folie hat sowohl die günstigen Eigenschaften der EMA-Copolymere als auch des Polypropylen.

Sehr günstige Eigenschaften hat auch eine Folie, die aus einer Mischung von EMA-Copolymeren und EAA hergestellt ist.

Desweiteren hat sich eine Folie sehr bewährt, die aus einer Mischung von EMA-Copolymeren mit EVA hergestellt ist.

Darüber hinaus ist es möglich allen EMA-Copolymeren bzw. Mischungen Füllstoffe beizufügen, wobei sich Kreide, Talkum bzw. Kieselsäure sehr bewährt haben.

## Patentansprüche

1. Kunststoff-Folie als Ersatz von Latex und/oder zur Herstellung von Handschuhen, die im Blasverfahren hergestellt ist, wobei die Folie Random-Copolymere aus Ethylen und Acrylsäuremethylester (EMA-Copolymere) enthält, wobei die EMA-Copolymere mit EVA abgemischt sind, **dadurch gekennzeichnet, daß** Füllstoffe vorgesehen sind und die EMA-Copolymere mit EVA und Polyethylen niedriger Dichte, LDPE bzw. LLDPE, PP und/oder EAA gemischt sein können.

2. Kunststoff-Folie nach Anspruch 1, **dadurch gekennzeichnet, daß** ein Anteil von Acrylsäuremethylester im Bereich von 5 bis 30 % vorzugsweise von 12 bis 24 % in den EMA-Copolymeren vorgesehen ist.

3. Kunststoff-Folie nach Anspruch 1 oder 2, **dadurch gekennzeichnet, daß** als Füllstoffe Kreide und/oder Talkum und/oder Kieselsäure vorgesehen sind.

## Claims

1. Synthetic material film as substitute for Latex and/or for producing gloves, which is produced in a blow-moulding process, wherein the film contains random copolymers of ethylene and acryl acid methylester (EMA copolymers), wherein the EMA copolymers are admixed with EVA, **characterised in that** fillers are provided and the EMA copolymers can be mixed with EVA and polyethylene of lower density, LDPE or LLDPE, PP and/or EAA.

2. Synthetic material film according to claim 1, **characterised in that** a proportion of acryl acid methylester is provided in the region of 5 to 30%, preferably 12 to 24%, in the EMA copolymers.

3. Synthetic material film according to claim 1 or 2, **characterised in that** chalk and/or talcum and/or silicic acid is or are provided as fillers.

## Revendications

1. Feuille plastique pour remplacer du latex et/ou pour fabriquer des gants, qui est fabriquée par une méthode de soufflage, dans laquelle la feuille contient des copolymères aléatoires à base d'éthylène et d'ester méthylique et d'acide acrylique (copolymères d'EMA), dans laquelle les copolymères d'EMA sont mélangés avec de l'EVA, **caractérisée en ce que** des matières de charge sont prévues et **en ce que** les copolymères d'EMA peuvent être mélangés avec de l'EVA et du polyéthylène basse densité, PEBD, ou du PEBDL (PEBD linéaire), du PP et/ou de l'EAA.

2. Feuille plastique selon la revendication 1, **caractérisée en ce que** l'on prévoit dans les copolymères d'EMA une fraction de d'ester méthylique d'acide acrylique dans la plage de 5 à 30 %, de préférence de 12 à 24 %.

3. Feuille plastique selon la revendication 1 ou 2, **caractérisée en ce que** l'on prévoit en tant que matières de charge de la craie et/ou du talc et/ou de l'acide silicique.
